# EUROPEAN PATENT APPLICATION

(11) **EP 3 432 323 A1**
(43) Date of publication of application: **23.01.2019**
(21) Application number: 17766085.9
(22) Date of filing: 30.01.2017
(51) Int. Cl.: H01F 7/127, H01F 7/16, H01H 50/36, H01H 50/44

(54) **ELECTROMAGNET DEVICE AND ELECTROMAGNETIC CONTACTOR**

(30) Priority: 16.03.2016 JP 2016052534
(71) Applicant: Fuji Electric FA Components & Systems Co., Ltd., Tokyo 103-0011 (JP)
(72) Inventor: WATANABE, Kazuyuki, Kawasaki-shi Kanagawa 210-9530 (JP); OKUBO, Koji, Tokyo 103-0011 (JP); UCHIYAMA, Taku, Tokyo 103-0011 (JP); KAWASHIMA, Shigenori, Tokyo 103-0011 (JP)
(74) Representative: Eidelsberg, Olivier Nathan
(86) International application number: PCT/JP2017/003186
(87) International publication number: WO 2017/159077

(57) **Abstract**

An electromagnetic device (17) comprises stationary cores (17a, 17b), a coil unit (17g) including spools (17e, 17f) with an electromagnetic coil (17c, 17d) wound around respective outer peripheries of the spools, a yoke (17j) fixed to one end of the stationary cores inserted through a core insertion hole (17h, 17i) of the spool, magnetic pole plates (17k, 17m) coupled to the other end of the stationary cores inserted through the core insertion hole of the spool, and a movable core (17n) disposed opposite the magnetic pole plate. The coil unit is provided with first coupling portions (30 to 33, 34 to 37, 46, 47, 38, 39) configured to detachably couple the yoke and the magnetic pole plate with the coil unit.

## Description

### Technical Field

The present invention relates to an electromagnetic device and an electromagnetic contactor including the electromagnetic device.

### Background Art

For example, an electromagnetic contactor in PTL 1 has an electromagnetic device disposed in a lower part inside a housing, and has a movable supporting portion for supporting a movable core of the electromagnetic device, disposed in an upper part inside the housing and coupled with a contact mechanism configured to open/close a current path.

The electromagnetic device includes a stationary core, a coil unit including a coil holder provided with a core insertion hole, in which the coil unit has an electromagnetic coil wound around an outer periphery of the coil holder and the stationary core is inserted through the core insertion hole, a yoke fixed to one end of the stationary core inserted through the the core insertion hole, a magnetic pole plate fixed to the other end of the stationary core, and a movable core disposed opposite the magnetic pole plate.

Assembly of the electromagnetic device having the aforementioned configuration is performed as following. First, the magnetic pole plate is integrally fixed to the other end of the stationary core, the stationary core is inserted into the core insertion hole provided in the coil holder of the coil unit from one end, and one end of the stationary core protruding from the core insertion hole is integrally fixed to the yoke to complete the assembly.

### Citation List

### Patent Literature

PTL 1: JP 2014-120246 A

### Summary of Invention

### Technical Problem

An electromagnetic device having the aforementioned configuration will need a replacement of a coil unit when an electromagnetic coil of the coil unit is damaged due to generation of abnormal heat or the like.

However, since a stationary core inserted through a core insertion hole of the coil unit has a yoke integrally fixed to one end and a magnetic pole plate integrally fixed to the other end, it is not possible to replace only the electromagnetic coil. Therefore, an entire unit of the electromagnetic device needs to be replaced, and the maintenance cost will increase.

The present invention has been accomplished in view of the problem described above, and it is an objective of the present invention to provide an electromagnetic device and an electromagnetic contactor capable of reducing the maintenance cost.

### Solution to Problem

To solve the aforementioned problem, an electromagnetic device according to one embodiment includes a stationary core, a coil unit in which an electromagnetic coil is wound around an outer periphery of a spool, a yoke fixed to one end of the stationary core inserted through a core insertion hole of the spool, a magnetic pole plate coupled to the other end of the stationary core inserted through the core insertion hole of the spool, and a movable core disposed opposite the magnetic pole plate, and includes a first coupling portion configured to detachably couple the yoke and the magnetic pole plate with the coil unit.

Furthermore, an electromagnetic contactor according to one embodiment includes the aforementioned electromagnetic device, in which a contact mechanism is coupled with the movable core, and in which opening and closing operations of the movable contact and the stationary contact in the contact mechanism is performed by moving the movable core in accordance with whether the electromagnetic coil is excited or not.

### Advantageous Effects of Invention

Since the electromagnetic device and the electromagnetic contactor according to the present invention may allow a coil unit to be replaced by itself, the maintenance cost may be reduced.

### Brief Description of Drawings

FIG. 1 is a longitudinal sectional view illustrating a disconnected state of an electromagnetic contactor of a first embodiment according to the present invention;
FIG. 2 is an exploded view illustrating components constituting the electromagnetic device of the first embodiment according to the present invention;
FIGS. 3A and 3B are diagrams illustrating a structure in which a coil unit and a yoke, constituting the electromagnetic device of the first embodiment according to the present invention, are detachably coupled together;
FIGS. 4A and 4B are diagrams illustrating a structure in which a coil unit and a magnetic pole plate, constituting the electromagnetic device of the first embodiment according to the present invention, are detachably coupled together;
FIG. 5 is a diagram illustrating a state before a stationary core fixed to the yoke is inserted into a core insertion hole of the coil unit detachably coupled with the magnetic pole plate in the first embodiment according to the present invention;
FIG. 6 is a diagram illustrating a state in which the yoke is detachably coupled with the coil unit in the first embodiment according to the present invention;
FIG. 7 is a longitudinal sectional view illustrating the disconnected state of an electromagnetic contactor of a second embodiment of the present invention;
FIG. 8 is an exploded view illustrating components constituting an electromagnetic device of the second embodiment according to the present invention;
FIG. 9 is a diagram illustrating a state before a stationary core fixed to a yoke is inserted into a core insertion hole of a coil unit in the second embodiment according to the present invention; and
FIG. 10 is a diagram illustrating a state in which the yoke is detachably coupled with the coil unit in the second embodiment according to the present invention.

### Description of Embodiments

Next, referring to the drawings, first and second embodiments of the present invention will be described. In the description of the drawings, same or similar elements are denoted by the same or similar reference signs. It should be noted that the drawings are schematic and relations between thicknesses and two-dimensional dimensions, ratios between thicknesses of respective layers, and the like may be different from actual ones. Thus, specific thicknesses and dimensions should be determined in consideration of the following descriptions. It goes without saying that relations between corresponding dimensions and ratios between respective dimensions may be different between drawings.

The first and second embodiments to be described below are intended to exemplify a device and a method for embodying the technical idea of the present invention, and the technical idea of the present invention does not limit materials, shapes, structures, arrangements, and the like of components to those described below. Various modifications may be made to the technical idea of the present invention within the technical scope defined by the claims.

### [An electromagnetic contactor of a first embodiment]

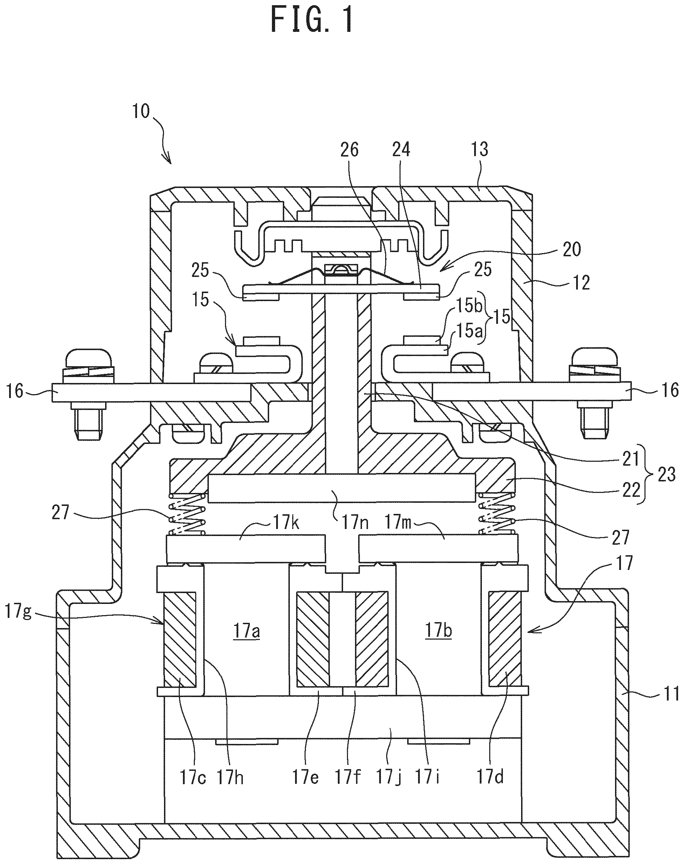

FIG. 1 is a sectional view illustrating an electromagnetic contactor 10 of a first embodiment according to the present invention.

A case for a main unit of the electromagnetic contactor 10 of the first embodiment consists of a lower case 11 made of an insulating material, an upper case 12 made of an insulating material and mounted above the lower case 11, and an arc-extinguishing cover 13 made of an insulating material and mounted on the upper end of the upper case 12 to cover an upper opening of the upper case 12.

On an upper wall of the lower case 11, stationary contact members 15 and terminal plates 16 are fixed.

The stationary contact member 15 and the terminal plate 16 are provided on a power supply side and on a load side (for example, the left side is the power supply side and the right side is the load side) in a pair, the upper stationary contact member 15 includes a stationary contact 15b above a conductive portion 15a, and the lower terminal plate 16 extends outward from the lower case 11.

The stationary contact member 15 is housed in the internal space of the upper case 12 by mounting the upper case 12 on the upper end of the lower case 11.

In the lower space of the lower case 11, an electromagnetic device 17 is housed. The electromagnetic device 17 includes a pair of stationary cores 17a, 17b, a coil unit 17g formed by integrating two spools 17e, 17f with electromagnetic coils 17c, 17d wound around respective outer peripheries, a yoke 17j fixed to one end face of the pair of stationary cores 17a, 17b inserted through core insertion holes 17h, 17i provided in the spools 17e, 17f, magnetic pole plates 17k, 17m fixed to the other end face of the pair of stationary cores 17a, 17b, and a movable core 17n disposed opposite the magnetic pole plates 17k, 17m.

In the upper space of the lower case 11 and the internal space of the upper case 12, a contact mechanism 20 is housed.

The contact mechanism 20 includes a movable holder 23 including a contact support portion 21 and a connecting portion 22 for fixing the movable core 17n of the electromagnetic device 17, disposed movably in the up-and-down direction, a plate-shaped movable contact member 24 coupled to an upper portion of the movable holder 23 and facing against the pair of conductive portions 15a on the power supply side and the load side from above, a movable contact 25 provided at a position facing against the stationary contact 15b of the movable contact member 24, a contact pressing spring 26 coupled to an upper portion of the contact support portion 21 and providing the movable contact member 24 with a downward spring biasing force, and a plurality of return springs 27 disposed between the magnetic pole plates 17k, 17m and the connecting portion 22 and biasing the movable core 17n in a direction away from the stationary cores 17a, 17b.

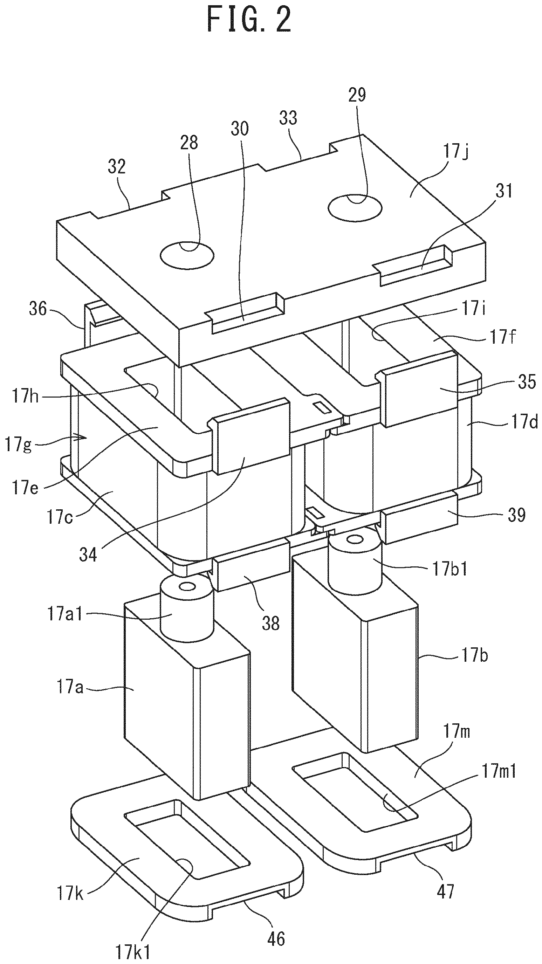

Next, structures of the stationary cores 17a, 17b, the coil unit 17g, the yoke 17j, and the magnetic pole plates 17k, 17m, constituting the electromagnetic device 17 of the first embodiment, will be described with reference to FIG. 2 to FIG. 4B.

As illustrated in FIG. 2, the yoke 17j is a rectangular plate-shaped magnetic body, and provided with two fixing holes 28, 29 spaced apart from each other in a longitudinal direction and penetrating through the yoke 17j in a thickness direction.

A pair of yoke locking recesses 30, 31 is formed by chipping corners on one long edge side of the yoke 17j in a stepped shape. A pair of yoke locking recesses 32, 33 is also formed by chipping corners on the other long edge side of the yoke 17j in a stepped shape.

In the two spools 17e, 17f constituting the coil unit 17g, rectangular core insertion holes 17h, 17i are formed.

In the coil unit 17g, four yoke locking protrusions 34 to 37 are formed on one opening side of the core insertion holes 17h, 17i, the protrusions protruding in the upward direction of FIG. 2, and four magnetic pole plate locking protrusions 38, 39 (two magnetic pole plate locking protrusions not illustrated) are formed on the other opening side of the core insertion holes 17h, 17i, the protrusions protruding in the downward direction of FIG. 2.

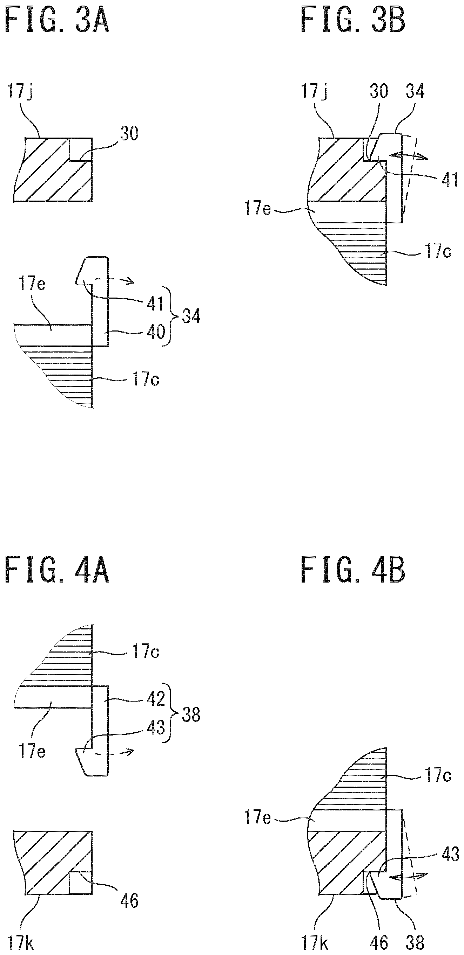

The yoke locking protrusion 34 consists of, as illustrated in FIG. 3A, an elastic leg portion 40 elastically deformable outwardly (in the direction of arrow indicated by a dashed line in FIG. 3A) and a claw portion 41 formed at the uppermost portion of the elastic leg portion 40. Other yoke locking protrusions 35 to 37 also include an elastic leg portion 40 and a claw portion 41, each having the same shape as the corresponding one of the yoke locking protrusion 34.

The magnetic pole plate locking protrusion 38 consists of, as illustrated in FIG. 4A, an elastic leg portion 42 elastically deformable outwardly (in the direction of arrow indicated by a dashed line in FIG. 4A) and a claw portion 43 formed at the lowermost portion of the elastic leg portion 42. Another magnetic pole plate locking protrusion 39 also includes an elastic leg portion 42 and a claw portion 43, each having the same shape as the corresponding one of the magnetic pole plate locking protrusion 38.

As illustrated in FIG. 2, the pair of stationary cores 17a, 17b is formed so as to have a rectangular cross-section of a size slightly smaller than the rectangular core insertion holes 17h, 17i of the spools 17e, 17f and provided with protruding cylindrical coupling shafts 17a1, 17b1 that can penetrate through the fixing hole 28, 29 of the yoke 17j on one end face.

The magnetic pole plates 17k, 17m are rectangular plate-shaped magnetic bodies and provided with rectangular insertion holes 17k1, 17m1 having substantially the same shape as the core insertion holes 17h, 17i of the spools 17e, 17f and magnetic pole plate locking recesses 46, 47 formed by chipping corners on one short edge side of the magnetic pole plates 17k, 17m in a stepped shape. A pair of magnetic pole plate locking recesses (not illustrated) is also formed by chipping corners on the other short edge side of the magnetic pole plates 17k, 17m in a stepped shape.

Next, an assembly procedure for the stationary cores 17a, 17b, the coil unit 17g, the yoke 17j, and the magnetic pole plates 17k, 17m, constituting the electromagnetic device 17 of the first embodiment, will be described with reference to FIG. 4A to FIG. 6.

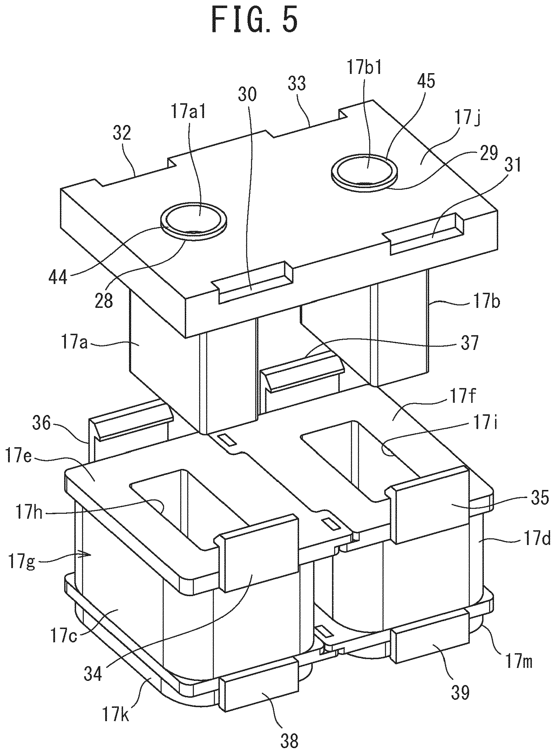

First, as illustrated in FIG. 5, the coupling shafts 17a1, 17b1 of the pair of stationary cores 17a, 17b are inserted into the fixing holes 28, 29 from the lower face of the yoke 17j. A crimping force is then applied to the upper ends of the coupling shafts 17a1, 17b1 protruding upward from the fixing holes 28, 29 on the upper face of the yoke 17j, and crimped portions 44, 45 deformed outwardly in a radial direction are formed on the upper ends of the coupling shafts 17a1, 17b1. Thus, the pair of stationary cores 17a, 17b and the yoke 17j are integrally fastened to each other by forming crimped portions 44, 45 on the coupling shafts 17a1, 17b1 of the stationary cores 17a, 17b.

Next, as illustrated in FIG. 5, the four magnetic pole plate locking protrusions 38, 39 (the other two magnetic pole plate locking protrusions not illustrated) of the coil unit 17g and the four magnetic pole plate locking recesses 46, 47 (the other two magnetic pole plate locking recesses not illustrated) of the magnetic pole plates 17k, 17m are brought into engagement with each other. As illustrated in FIG. 4B, the magnetic pole plate locking protrusion 38 is locked to the magnetic pole plate locking recess 46 at the claw portion 43 after being elastically deformed. Another magnetic pole plate locking protrusion 39 is also locked to the magnetic pole plate locking recess 47. Thus, the coil unit 17g and the magnetic pole plates 17k, 17m are integrally fastened to each other.

Next, as illustrated in FIG. 5, the pair of stationary cores 17a, 17b integrally fastened to the yoke 17j is inserted into the core insertion holes 17h, 17i provided in the spools 17e, 17f of the coil unit 17g.

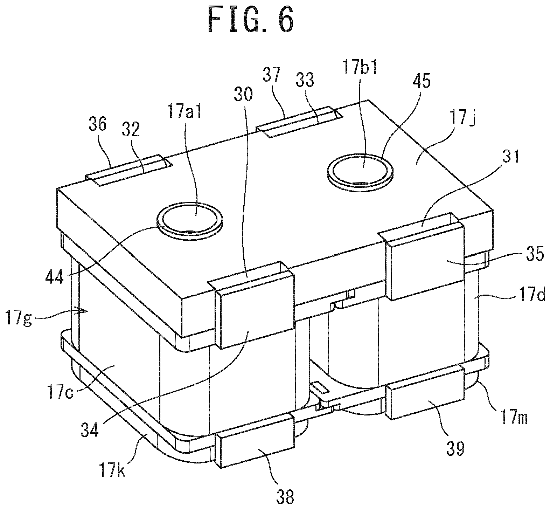

At this time, as illustrated in FIG. 6, the four yoke locking protrusions 34 to 37 of the coil unit 17g and the yoke locking recesses 30 to 33 of the yoke 17j are brought into engagement with each other. As illustrated in FIG. 3B, the yoke locking protrusion 34 is locked to the yoke locking recess 30 at the claw portion 41 after being elastically deformed. Other yoke locking protrusions 35 to 37 are also locked to the yoke locking recesses 31 to 33. Thus, the coil unit 17g and the yoke 17j are integrally fastened to each other.

Next, an operation of the electromagnetic contactor 10 of the first embodiment will be described with reference to FIG. 1.

In the electromagnetic contactor 10 in a disconnected state illustrated in FIG. 1, an electromagnetic force is generated from the stationary cores 17a, 17b by exciting the electromagnetic coils 17c, 17d of the electromagnetic device 17. With this force, the movable core 17n overcomes the spring biasing force of the return spring 27 to be attracted to the stationary cores 17a, 17b, and the movable holder 23 moves downward. When the movable contact member 24 moves downward, the movable contacts 25 are connected to the stationary contacts 15b, and the electromagnetic contactor 10 enters into a power-on state.

In the electromagnetic device 17 of the first embodiment, the coil unit 17g can be replaced by itself when the electromagnetic coils 17c, 17d are damaged due to generation of abnormal heat.

In other words, from a state in which the yoke 17j and the magnetic pole plates 17k, 17m are integrally fastened to the coil unit 17g as illustrated in FIG. 6, engagement between the magnetic pole plate locking recesses 46, 47 and the claw portions 43 is released by elastically deforming the elastic leg portions 42 of the magnetic pole plate locking protrusions 38, 39 of the coil unit 17g outwardly. With this operation, the coil unit 17g and the magnetic pole plates 17k, 17m are separated into separate components.

Furthermore, engagement between the yoke locking recesses 30 to 33 and the claw portions 41 is released by elastically deforming the elastic leg portions 40 of the yoke locking protrusions 34 to 37 of the coil unit 17g outwardly. With this operation, the coil unit 17g and the yoke 17j integrally fastened to the stationary cores 17a, 17b are separated into separate components.

The coil unit 17g in which the electromagnetic coils 17c, 17d are damaged is then replaced, and a new coil unit 17g is used. With the aforementioned operation, the new coil unit 17g and the magnetic pole plates 17k, 17m are integrally fastened to each other, and the new coil unit 17g and the yoke 17j are also integrally fastened to each other.

Thus, since the electromagnetic device 17 of the first embodiment allows the magnetic pole plates 17k, 17m and the yoke 17j integrally fastened to the stationary cores 17a, 17b to be separated into separate components with respect to the coil unit 17g by releasing engagement between the magnetic pole plate locking recesses 46, 47 and the claw portions 43 by elastically deforming the elastic leg portions 42 of the magnetic pole plate locking protrusions 38, 39 of the coil unit 17g outwardly and releasing engagement between the yoke locking recesses 30 to 33 and the claw portions 41 by elastically deforming the elastic leg portions 40 of the yoke locking protrusions 34 to 37 of the coil unit 17g outwardly, it is possible to replace only the coil unit 17g with a new one.

Therefore, it is possible to reduce the maintenance cost significantly compared with a case in which an entire unit of the electromagnetic device is replaced.

In addition, because of the convenient structure in which the yoke locking protrusions 34 to 37 provided in the coil unit 17g are locked to the yoke locking recesses 30 to 33 provided in the yoke 17j by being elastically deformed and the magnetic pole plate locking protrusions 38, 39 provided in the coil unit 17g are locked to the magnetic pole plate locking recesses 46, 47 provided in the magnetic pole plates 17k, 17m by being elastically deformed, it is possible to facilitate assembly and disassembly of the coil unit 17g, the yoke 17j, and the magnetic pole plates 17k, 17m as well as to reduce the manufacturing cost of the electromagnetic device 17.

It is to be noted that a first recess for locking according to the present invention corresponds to the yoke locking recesses 30 to 33, a first protrusion for locking according to the present invention corresponds to the yoke locking protrusions 34 to 37, a second recess for locking according to the present invention corresponds to the magnetic pole plate locking recesses 46, 47, a second protrusion for locking according to the present invention corresponds to the magnetic pole plate locking protrusions 38, 39, and a first coupling portion according to the present invention corresponds to the first recess and the first protrusion for locking and the second recess and the second protrusion for locking described above.

In the first embodiment, the first recess for locking is provided in the yoke 17j and the first protrusion for locking is provided in the coil unit 17g; however, the first recess for locking and the first protrusion for locking may be provided in an opposite manner.

Furthermore, in the first embodiment, the second recess for locking is provided in the magnetic pole plates 17k, 17m and the second protrusion for locking is provided in the coil unit 17g; however, the second recess for locking and the second protrusion for locking may be provided in an opposite manner.

### [An electromagnetic contactor of a second embodiment]

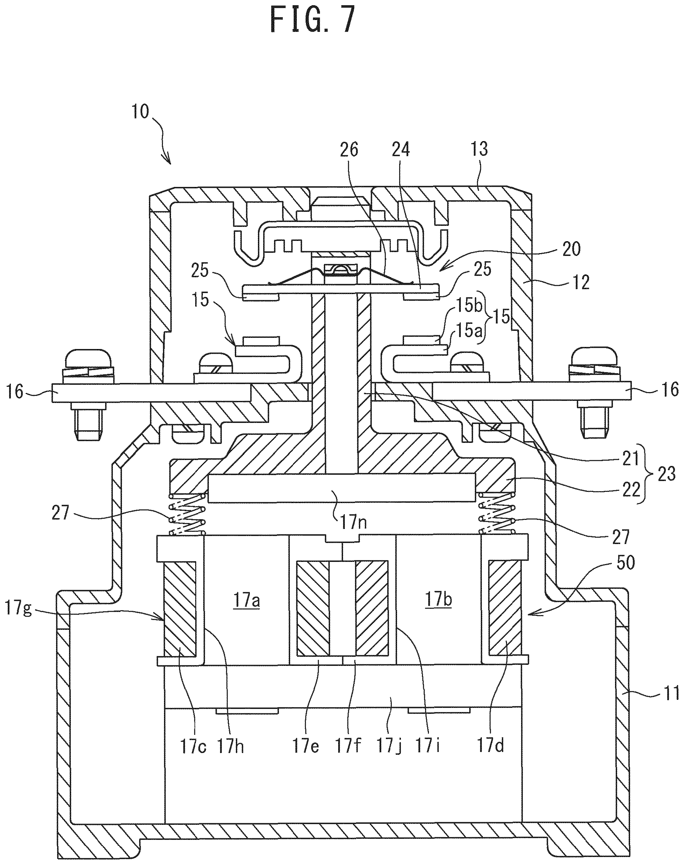

FIG. 7 is a sectional view illustrating an electromagnetic contactor 10 of a second embodiment according to the present invention. The same reference signs denote the same components as illustrated in FIG. 1 to FIG. 6, and a corresponding description will be omitted.

The electromagnetic device 50 of the electromagnetic contactor 10 of the second embodiment is different from the electromagnetic device 17 of the first embodiment in that the electromagnetic device 50 does not include magnetic pole plates 17k, 17m at the other end face of the pair of stationary cores 17a, 17b.

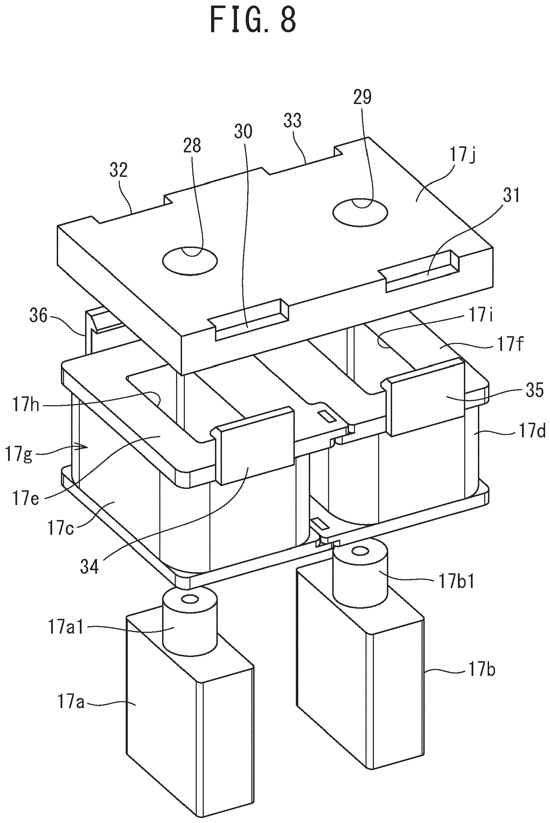

As illustrated in FIG. 8, a yoke 17j is provided with a pair of yoke locking recesses 30, 31 formed by chipping corners on one long edge side of the yoke 17j in a stepped shape and a pair of yoke locking recesses 32, 33 formed by chipping corners on the other long edge side of the yoke 17j in a stepped shape.

In the coil unit 17g, four yoke locking protrusions 34 to 37 having the shape as illustrated in FIGS. 3A and 3B are formed on one opening side of the core insertion holes 17h, 17i, the protrusions protruding in the upward direction of FIG. 8.

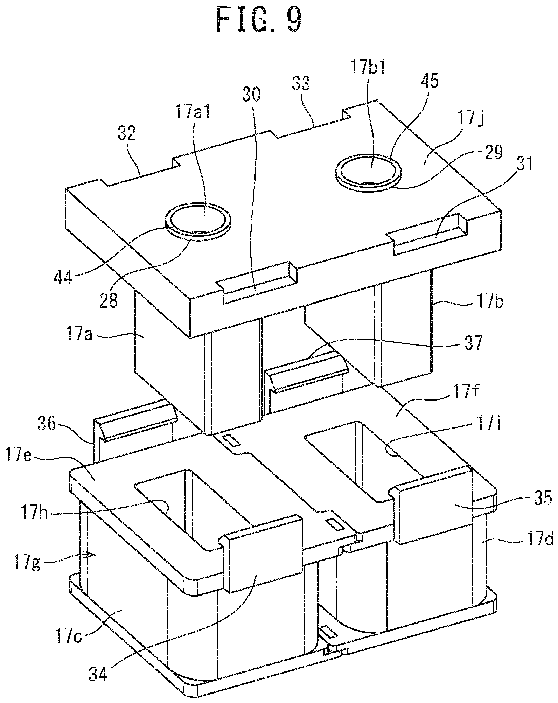

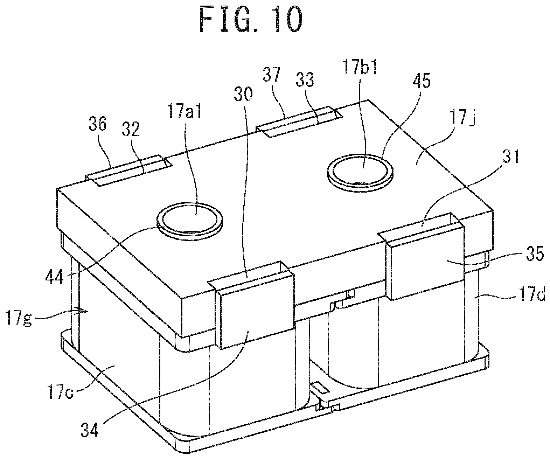

An assembly procedure for the stationary cores 17a, 17b, the coil unit 17g, and the yoke 17j, constituting the electromagnetic device 50 of the second embodiment, will be described with reference to FIG. 9 and FIG. 10.

First, as illustrated in FIG. 9, the coupling shafts 17a1, 17b1 of the pair of stationary cores 17a, 17b are inserted into the fixing holes 28, 29 from the lower face of the yoke 17j. A crimping force is then applied to the upper ends of the coupling shafts 17a1, 17b1 protruding upward from the fixing holes 28, 29 on the upper face of the yoke 17j, and crimped portions 44,45 deformed outwardly in a radial direction are formed on the upper ends of the coupling shafts 17a1, 17b1. Thus, the pair of stationary cores 17a, 17b and the yoke 17j are integrally fastened to each other.

Next, the pair of stationary cores 17a, 17b integrally fastened to the yoke 17j is inserted into the core insertion holes 17h, 17i provided in the spools 17e, 17f of the coil unit 17g. At this time, as illustrated in FIG. 10, the four yoke locking protrusions 34 to 37 of the coil unit 17g and the yoke locking recesses 30 to 33 of the yoke 17j are brought into engagement with each other. The yoke locking protrusion 34 is, referring to FIG. 3B, locked to the yoke locking recess 30 at the claw portion 41 after being elastically deformed. Other yoke locking protrusions 35 to 37 are also locked to the yoke locking recesses 31 to 33. Thus, the coil unit 17g and the yoke 17j are integrally fastened to each other.

In the electromagnetic device 50 of the second embodiment, the coil unit 17g can be replaced by itself when the electromagnetic coils 17c, 17d are damaged due to generation of abnormal heat.

In other words, from a state in which the yoke 17j is integrally fastened to the coil unit 17g as illustrated in FIG. 10, engagement between the yoke locking recesses 30 to 33 and the claw portions 41 is released by elastically deforming the elastic leg portions 40 of the yoke locking protrusions 34 to 37 of the coil unit 17g outwardly. With this operation, the coil unit 17g and the yoke 17j integrally fastened to the stationary cores 17a, 17b are separated into separate components.

The coil unit 17g in which the electromagnetic coils 17c, 17d are damaged is then replaced, and a new coil unit 17g is used. With the aforementioned operation, the new coil unit 17g and the yoke 17j are integrally fastened to each other.

Thus, since the electromagnetic device 50 of the second embodiment allows the yoke 17j integrally fastened to the stationary cores 17a, 17b to be separated into separate components with respect to the coil unit 17g by releasing engagement between the yoke locking recesses 30 to 33 and the claw portions 41, it is possible to replace only the coil unit 17g with a new one.

Therefore, it is also possible in the electromagnetic device 50 of the second embodiment to reduce the maintenance cost significantly compared with a case in which an entire unit of the electromagnetic device is replaced.

It is to be noted that a second coupling portion according to the present invention corresponds to the first recess for locking, which corresponds to the yoke locking recesses 30 to 33, and the first recess for locking, which corresponds to the yoke locking protrusions 34 to 37.

### Reference Signs List

- 10: electromagnetic contactor
- 11: lower case
- 12: upper case
- 13: arc-extinguishing cover
- 15: stationary contact member
- 15a: conductive portion
- 15b: stationary contact
- 16: terminal plate
- 17: electromagnetic device
- 17a, 17b: stationary core
- 17a1, 17b1: coupling shaft
- 17c, 17d: electromagnetic coil
- 17e, 17f: spool
- 17g: coil unit
- 17h, 17i: core insertion hole
- 17j: yoke
- 17k, 17m: magnetic pole plate
- 17n: movable core
- 20: contact mechanism
- 21: contact support portion
- 22: connecting portion
- 23: movable holder
- 24: movable contact member
- 25: movable contact
- 24: movable contact member
- 26: contact pressing spring
- 27: return spring
- 28, 29: fixing hole
- 30-33: yoke locking recess
- 34-37: yoke locking protrusion
- 38, 39: magnetic pole plate locking protrusion
- 40: elastic leg portion
- 41: claw portion
- 42: elastic leg portion
- 43: claw portion
- 44, 45: crimped portion
- 46, 47: magnetic pole plate locking recess
- 50: electromagnetic device

## Claims

1. An electromagnetic device comprising:
a stationary core; a coil unit including a spool with an electromagnetic coil wound around an outer periphery; a yoke fixed to one end of the stationary core inserted through a core insertion hole of the spool; a magnetic pole plate coupled to the other end of the stationary core inserted through the core insertion hole of the spool; and a movable core disposed opposite the magnetic pole plate,
wherein the electromagnetic device is provided with a first coupling portion configured to detachably couple the yoke and the magnetic pole plate with the coil unit.

2. The electromagnetic device according to claim 1, wherein the first coupling portion comprises:
a first recess for locking provided in one of the coil unit or the yoke; and a first protrusion for locking provided in the other one of the coil unit or the yoke and locked to the first recess for locking by being elastically deformed; and
a second recess for locking provided in one of the coil unit or the magnetic pole plate; and a second protrusion for locking provided in the other one of the coil unit or the magnetic pole plate and locked to the second recess for locking by being elastically deformed.

3. An electromagnetic device comprising:
a stationary core; a coil unit including a spool with an electromagnetic coil wound around an outer periphery; a yoke fixed to one end of the stationary core inserted through a core insertion hole of the spool; and a movable core disposed opposite the other end of the stationary core inserted through the core insertion hole of the spool,
wherein the electromagnetic device is provided with a second coupling portion configured to detachably couple the yoke with the coil unit.

4. The electromagnetic device according to claim 3,
wherein the second coupling portion comprises:
a first recess for locking provided in one of the coil unit or the yoke; a first protrusion for locking provided in the other one of the coil unit or the yoke and locked to the first recess for locking by being elastically deformed.

5. An electromagnetic contactor comprising the electromagnetic device according to any one of claims 1 to 4,
wherein a contact mechanism is coupled with the movable core, and wherein opening and closing operations of the movable contact and the stationary contact in the contact mechanism are performed by moving the movable core in accordance with whether the electromagnetic coil is excited or not.
